# EUROPÄISCHE PATENTSCHRIFT

(11) **EP 0 581 306 B1**
(45) Veröffentlichungstag und Bekanntmachung des Hinweises auf die Patenterteilung: **14.01.1998**
(21) Anmeldenummer: 93112255.0
(22) Anmeldetag: 30.07.1993
(51) Int. Cl.: G02B 6/44, G02B 6/36

(54) **Spleissbox**
Splice box
Boîtier d'epissure

(30) Priorität: 30.07.1992 DE 9210229 U
(43) Veröffentlichungstag der Anmeldung: 02.02.1994
(73) Patentinhaber: ELEKTRO GRUNDLER Ges.m.b.H. & Co. KG., A-5020 Salzburg (AT)
(72) Erfinder: Grundler, Gottfried, A-5020 Salzburg (AT)
(74) Vertreter: Beetz & Partner Patentanwälte

(56) Entgegenhaltungen:
- EP-A- 0 185 923
- EP-A- 0 505 710
- WO-A-90/00261
- DE-A- 3 413 401
- US-A- 5 097 529
- US-A- 5 109 467

## Beschreibung

Die Erfindung bezieht sich auf eine Spleißbox für Lichtwellenleiter der im Oberbegriff des Anspruchs 1 angegebenen Gattung.

Derartige Spleißboxen dienen zur geschützten Aufnahme der verspleißten Verbindungen von Lichtwellenleitern (LWL) und ihrer jeweiligen Endabschnitte, die in mehreren losen Windungen verlegt sind, um ein wiederholtes Abschneiden von Leiterstücken bei der Herstellung weiterer Verbindungen zu ermöglichen. Bei herkömmlichen Spleißboxen wird ein LWL-Kabel durch eine Öffnung in einer Wand in die Spleißbox eingeführt und in einer Zugentlastung fixiert. Eine Überlänge einzelner oder auch mehrerer LWL wird manuell aufgewickelt und frei in die Spleißbox gelegt. Die Enden der Lichtwellenleiter werden in einer Spleißkassette innerhalb der Spleißbox zusammengeführt und miteinander verbunden. Aufgrund der vergleichsweise steifelastischen Ummantelung der Lichtwellenleiter und -kabel erfolgt eine selbsttätige Aufweitung der losen Windungen gegen die Innenwände der Spleißbox mit der Folge, daß Windungen miteinander verknäueln und/oder aus der geöffneten Spleißbox ausbrechen. Zur Vermeidung dieser Erscheinungen wird zuerst die Verspleißung der einzelnen Lichtwellenleiter vorgenommen, dann werden die Überlängen der Lichtwellenleiter aufgewickelt und die so erhaltenen Wicklungen in die Spleißbox eingelegt. Schließlich wird die Spleißbox durch einen Deckel geschlossen. Das nachträgliche Aufwickeln hat den Nachteil, daß die empfindlichen Spleiße erheblichen Belastungen ausgesetzt werden und daß außerdem Verdrehungen der Kabel und Brüche der Lichtwellenleiter auftreten können.

Die in der eingangs genannten EP-A 0 185 923 beschriebene gattungsgemäße Spleißbox für Lichtwellenleiter hat eine kreisrunde oder ovale Form und weist in ihrer Außenwandung mehrere große Öffnungen auf durch welche die LWL-Kabel lose ein- und herausgeführt werden.

Der von einer zylindrischen Innenwand und der Außenwand begrenzte ringförmige bzw. ovale Innenraum der Box ist durch bogenförmige Leitplatten in einen radial äußeren und einen inneren Ringraum unterteilt, wobei die LWL-Kabel im äußeren und die freigelegten Lichtwellenleiter im inneren Ringraum verlaufen. An der ringförmigen Innenwand, den Leitplatten und der Außenwand sind horizontale Laschen angeformt, die Halterungen für die eingeführten LWL-Kabel und für die Lichtwellenleiter bilden. Ferner sind im äußeren Ringraum Zugentlastungen für die LWL-Kabel bildende Klemmelemente paarweise angeordnet.

Eine aus der EP-A-0 505 710 bekannte kassettenförmige Spleißbox zum Verbinden und Verzweigen von Lichtwellenleitern weist ein im wesentlichen rechteckiges Gehäuse auf, in dessen beiden schmaleren Seitenwandungen jeweils zwei Öffnungen zum Ein- und Herausführen je eines LWL-Kabels vorgesehen sind. Im Bereich dieser Öffnungen befinden sich Klemmungen für die Endteile der LWL-Kabel und im Innenraum sind Halterungen zur Führung der freigelegten Lichtwellenleiter auf zwei nebeneinanderliegenden kreisförmigen Bahnen vorgesehen.

Weitere Spleißboxen für Lichtwellenleiter sind z.B. aus der DE-A-3 413 401 bekannt. Diese Ausführungen haben ein rechteckiges Gehäuse mit Ein- und Austrittsöffnungen für LWL-Kabel in den schmalen geradlinigen Seitenwänden sowie einfache Rückhaltelaschen zur gemeinsamen Führung aller freigelegter Lichtwellenleiter auf einer etwa ovalen Bahn. Im zentralen Innenraum ist eine Spleißvorrichtung für eine Vielzahl von Lichtwellenleitern fest installiert. Eine ähnliche Spleißbox für Lichtwellenleiter ist in der US-A-5 109 467 beschrieben.

Aufgabe der Erfindung ist es, eine Spleißbox anzugeben, in der Überlängen der zu verbindenden Lichtwellenleiter und -kabel auf einfache Weise geordnet untergebracht und festgehalten werden können.

Diese Aufgabe wird durch die im Patentanspruch 1 angegebenen Merkmale gelöst.

Im folgenden werden Ausführungsbeispiele der Erfindung anhand der Zeichnung erläutert. Es zeigen:
- Fig. 1: eine perspektivische Ansicht einer Spleißbox ohne Deckel;
- Fig. 2: die Spleißbox nach Fig. 1 in Draufsicht;
- Fig. 3: die Spleißbox nach Fig. 1 im Schnitt III-III; und
- Fig. 4: eine Zugentlastung.

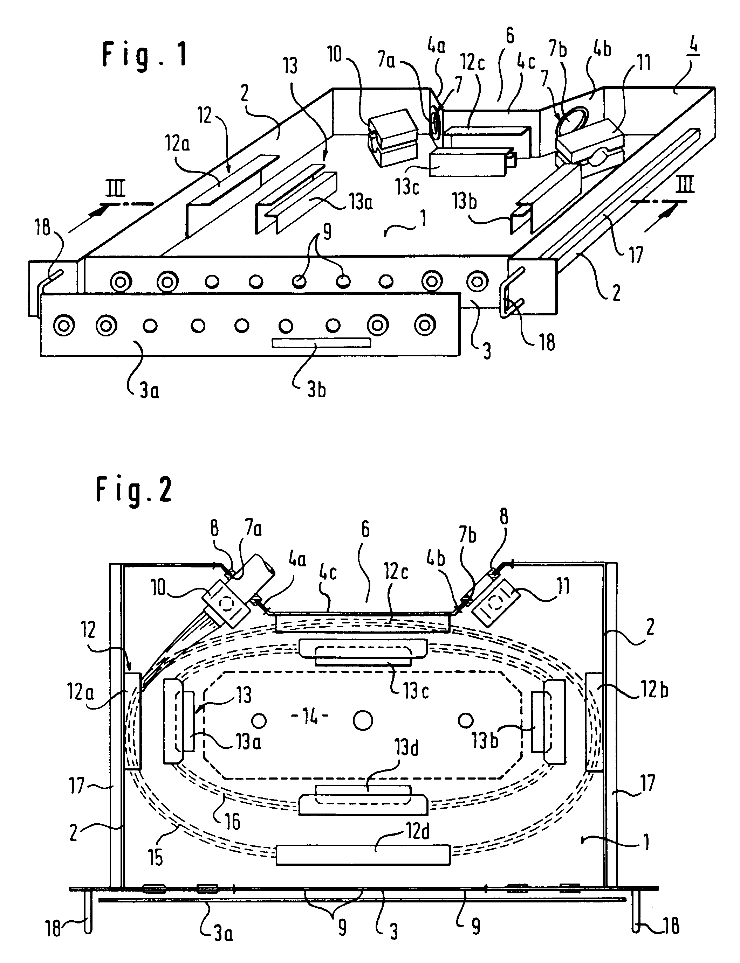

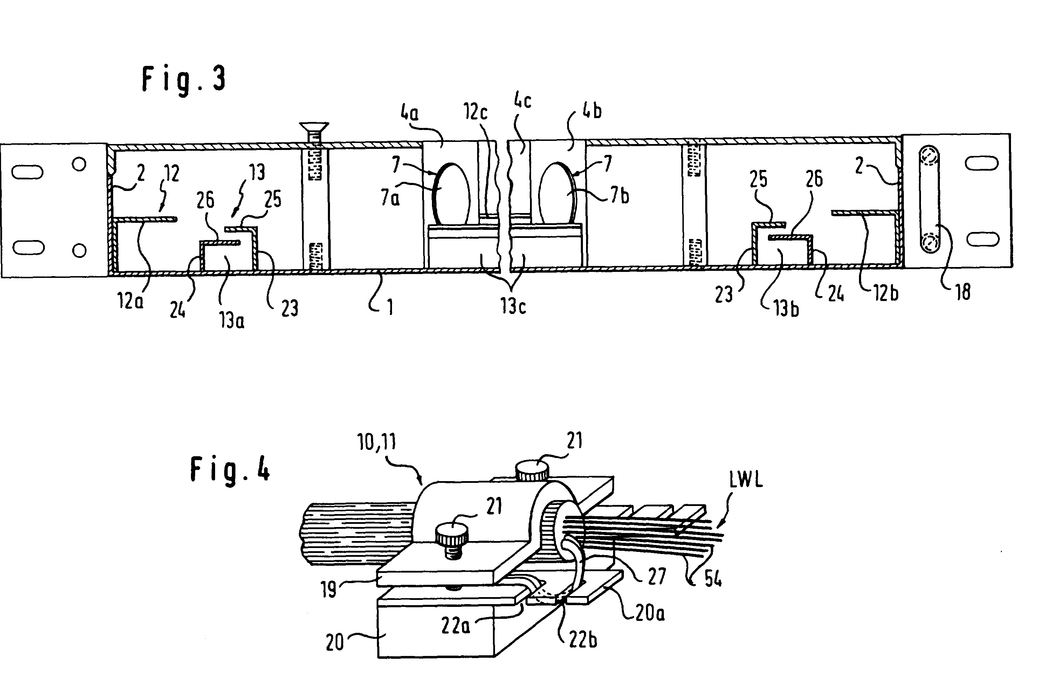

Die in Fig. 1, 2 dargestellte Spleißbox besitzt einen Boden 1, zwei Seitenwände 2, eine Frontplatte 3, eine Rückwand 4 und einen lösbaren - nicht dargestellten - Deckel. Die Rückwand 4 begrenzt in ihrem mittleren Teil eine in das Spleißboxinnere gerichtete Nische 6, die durch zwei schrägstehende Wandelemente 4a, 4b und ein dazwischenliegendes parallel zur sonstigen Rückwand 4 verlaufendes Wandelement 4c gebildet wird. In den schrägen Wandelementen 4a, 4b sind Öffnungen 7a, 7b ggf. mit Dichtmanschetten 8 zur Aufnahme von je einem Glasfaserkabel vorgesehen. In der Frontplatte 3 sind eine oder mehrere Reihen von Bohrungen 9 angeordnet, durch welche die einzelnen Lichtwellenleiter aus der Spleißbox herausgeführt werden. In diesen Bohrungen 9 können Verbinder bzw. Kupplungsmuffen montiert sein. Die Frontplatte 3 wird durch eine eloxierte Alu-Platte 3a mit fortlaufender gravierter Beschriftung und/oder Beschriftungsstreifen 3b abgedeckt. Auf dem Boden 1 sind in der Nähe der Öffnungen 7 Zugentlastungen 10, 11 befestigt, in denen die Enden der Kabelmäntel und die Zugstränge durch Klemmung fixiert werden. Eine dieser Zugentlastungen ist in Fig. 4 im einzelnen dargestellt. Im Inneren der Spleißbox befinden sich außerdem Halterungen 12, 13 zum Festhalten von mehreren Windungen der Endabschnitte der Lichtwellenleiter. Diese Halterungen sind hakenförmig ausgebildet und so angeordnet, daß sie den Verlauf von zwei oder mehreren Windungen nachbilden. Die äußeren Halterungen 12a, 12b, 12c bilden eine äußere etwa elliptische Bahn 15 und die inneren Halterungen 13a, 13b, 13c, 13d eine innere Spur 16. Etwa in der Mitte der Spleißbox befindet sich der eigentliche Spleißbereich 14, in dem eine nicht dargestellte Spleißkassette bzw. die Verbindungsstellen der einzelnen Lichtwellenleiter angeordnet werden. Die Zugentlastungen 10, 11 sind direkt neben der äußeren Bahn 15 auf dem Boden 1 der Spleißbox befestigt. Zweckmäßig ist die Position und der Neigungswinkel der schrägen Wandelemente 4a, 4b so gewählt, daß das durch die Öffnung 7 verlaufende Kabel direkt auf die Zugentlastung 10, 11 trifft und die LWL mit ausreichendem Krümmungsradius in die Bahn 15 einlaufen. Bei der dargestellten Ausführung sind die Halterungen 12 der inneren Ringschleife am Boden 1 befestigt und Teile der äußeren Halterungen 12 an den Wandungen der Spleißbox angebracht. An den Seitenwänden 2 sind Laufschienen 17 befestigt, um die geschlossene Spleißbox mittels an der Frontplatte 3 seitlich montierter Handgriffe 18 in einen Schrank einzuschieben.

Bei der Spleißbox nach Fig. 1 werden die äußeren seitlichen Halterungen 12a, 12b durch Stege gebildet, deren Querschnitt die Form eines umgekehrten L hat, wobei die horizontalen Schenkel in das Innere der Spleißbox hineinragen und die vertikalen Schenkel an den Seitenwandungen 2 großflächig anliegen. Die rückwärtige Halterung 12c ist in gleicher Weise ausgebildet und am geraden Mittelabschnitt 4c der Wandung 4 befestigt.

Die in Fig. 2 unten dargestellte Halterung 12d ist ebenfalls als Steg mit L-förmigem Querschnitt ausgebildet, wobei der vertikale Schenkel auf dem Boden 1 vor der Frontwand 3 befestigt ist.

Die vorgegebenen Windungsbahnen 15, 16 sollten grundsätzlich einen möglichst großen Krümmungsradius aufweisen. Werden LWL verschiedener Eigensteifigkeit miteinander verspleißt, so sollten die steiferen LWL in der äußeren Bahn 15 und die weniger steifen in der inneren Bahn 16 verlegt werden.

Die inneren Halterungen 13a bis 13d bestehen aus jeweils zwei verschränkt zueinander angebrachten Stegen 23, 24, deren vertikale Schenkel auf dem Boden 1 befestigt sind und deren gegensinnig gerichtete horizontale Schenkel 25, 26 unter Ausbildung eines ausreichend breiten Einführspaltes für die LWL-Windungen ineinandergreifen. Dabei sind die inneren Stege 23 höher als die äußeren Stege 24. Zweckmäßig sind die äußeren Halterungen 12a, 12b und 12c so konstruiert, daß in ihr mehrere Windungen der unterzubringenden Überschußlänge übereinander Aufnahme finden können. Die vordere Halterung 12d ist niedriger, damit die im Spleißbereich 14 miteinander verbundenen LWL ohne zu engen Krümmungsradius zu den in den Öffnungen 9 der Frontplatte 3 sitzenden Steckern geführt werden können. Bei den inneren Halterungen 13 ist der Einführspalt der vorderen Halterung 13d breiter als der Spalt zwischen den beiden Schenkeln der hinteren Halterung 13c, um das Herausführen der LWL durch die Frontplatte 3 über die Kupplungsstücke zu vereinfachen.

Die in Fig. 4 dargestellte Zugentlastung 10, 11 weist einen als Z-Profil ausgeführten Sockel 20 auf, der auf dem Boden 1 befestigt ist. Ein schellenförmiges Klemmteil 19 ist mittels Schrauben 21 auf dem Sockel 20 lösbar montiert. Eine Platte 20a überragt das Klemmteil 19 in Kabellängsrichtung nach vorne. Zwischen dem Sockel 20 und dem Klemmteil 19 wird das LWL-Kabel durch Anziehen der Schrauben 21 eingespannt. In der Platte 20a sind vorzugsweise zwei Ausnehmungen 22a, 22b in Form von seitlichen Schlitzen oder Durchgangsbohrungen ausgebildet, durch welche die Endstücke der im LWL-Kabel mitgeführten hochfesten Zugstränge 27 umgelenkt hindurchgeführt und fixiert werden. Mit dem Anziehen der Schrauben 21 zur Klemmung des Kabelmantels werden gleichzeitig die Zugstränge 27 aus z. B. Aramidfasern zwischen den Seitenlaschen des Klemmteils 19 und der Plattenoberfläche eingespannt.

Die beschriebenen Spleißboxen sind aus Stahlblech hergestellt.Auch die Halterungen 12, 13 können aus gebogenen Blechteilen hergestellt sein, die durch Punktschweißen an den Wandungen oder am Boden befestigt sind. Die Halterungen können aber auch aus einem geeigneten Kunststoff bestehen und z. B. durch Kleben in der Spleißbox befestigt sein.

Die Erfindung ist nicht auf die vorstehend beschriebene Ausführung beschränkt. So können die Halterungen 12, 13 auch eine an die jeweilige innere bzw. äußere Bahn angepaßte Bogenform haben. Ferner können die Halterungen auch als endseitig offene Tröge oder Kästen ausgebildet sein und einen Deckel aufweisen, der an einer Längsseite angelenkt und durch z. B. einen Schnappverschluß gesichert werden kann.

## Patentansprüche

1. Spleißbox für Lichtwellenleiter mit
- einem Boden (1) und mehreren Wandungen (2 bis 4),
- Öffnungen (7, 9) in mindestens einer Wandung,
- einem Spleißbereich (14) etwa in der mitte der Spleißbox, zur Aufnahme der Verbindungsstellen der zu verbindenden Lichtwellenleiter , und
- im Inneren der Spleißbox längs vorgegebener Bahnen (15, 16) angeordneten Halterungen (12, 13) zum Festlegen von losen Windungen der zu verbindenden Lichtwellenleiter (54),
dadurch gekennzeichnet, daß
die Rückwand (4) aus zwei äußeren in einer Ebene angeordneten Wandelementen, einem mittleren parallel dazu angeordneten, nach innen versetzten Wandelement (4c) und aus je einem zwischen äußerem und mittlerem Wandelement (4c) schräg verlaufendem Wandelement (4a, 4b) besteht, wobei die rückwärtigen Öffnungen (7) in den schrägen Wandelementen (4a, 4b) angeordnet sind.

2. Spleißbox nach Anspruch 1, dadurch gekennzeichnet, daß äußere und innere Halterungen (12a bis 12d; 13a bis 13d) an den Wandungen (2, 4c) und am Boden (1) montiert sind, die jeweils eine äußere und eine innere Windungsbahn (15; 16) bilden.

3. Spleißbox nach Anspruch 1 oder 2, dadurch gekennzeichnet, daß jeweils mehrere Halterungen (12, 13) längs der vorgegebenen Bahnen (15, 16) angeordnet sind.

4. Spleißbox nach einem der Ansprüche 1 bis 3, dadurch gekennzeichnet, daß die inneren Halterungen (13) in Form von zwei L-förmigen Stegen (23, 24) ausgebildet sind, wobei die nach außen weisenden horizontalen Schenkel (25) der inneren Stege (23) die horizontalen, nach innen weisenden Schenkel (26) der äußeren Stege (24) übergreifen.

5. Spleißbox nach einem der Ansprüche 1 bis 4, dadurch gekennzeichnet, daß auf dem Boden (1) den Öffnungen (7) in den schrägen Wandelementen (4a, 4b) gegenüberliegend Zugentlastungen (10, 11) angeordnet sind.

6. Spleißbox nach Anspruch 5, dadurch gekennzeichnet, daß die Zugentlastungen (10, 11) einen auf dem Boden (1) befestigten Sockel (20), ein durch Schrauben (21) festziehbares Klemmglied (19) und eine gesonderte Fixierung (22a, 22b) für die Zugelemente (27) des Lichtwellenleiter-Kabels in einer Zugentlastungsplatte (20a) aufweisen.

7. Spleißbox nach einem der Ansprüche 1 bis 6, dadurch gekennzeichnet, daß in der die vordere Wand bildenden Frontplatte (3) mehrere Bohrungen (9) zum Herausführen einzelner Lichtwellenleiter angeordnet sind.

8. Spleißbox nach Anspruch 7, dadurch gekennzeichnet, daß in den Bohrungen (9) Verbinder bzw. Kupplungsmuffen angeordnet sind.

9. Spleißbox nach Anspruch 7 oder 8, dadurch gekennzeichnet, daß die Frontplatte (3) durch eine mit Beschriftung versehene Platte (3a) abgedeckt ist.

## Claims

1. A splice box for optical waveguides with
- a base (1) and a plurality of walls (2 to 4),
- apertures (7, 9) in at least one wall,
- a splicing region (14) approximately in the centre of the splice box to accommodate the splices of the optical waveguides to be spliced, and
- mountings (12, 13) arranged longitudinally of specified paths (15, 16) in the interior of the splice box to secure loose coils of the optical waveguides to be spliced (54),
characterised in that
the rear wall (4) comprises two exterior wall members arranged in one plane, a central wall member (4c) inwardly offset and arranged parallel thereto, and a wall member (4a, 4b) extending diagonally between each of the exterior wall members and the central wall member (4c), the rear apertures (7) being arranged in the diagonal wall members (4a, 4b).

2. A splice box according to claim 1, characterised in that, on the walls (2, 4c) and the base (1), there are installed exterior and interior mountings (12a to 12d; 13a to 13d) which form an exterior and an interior winding path (15; 16) respectively.

3. A splice box according to claim 1 or 2, characterised in that a plurality of mountings (12, 13) is respectively arranged longitudinally of the specified paths (15, 16).

4. A splice box according to one of claims 1 to 3, characterised in that the interior mountings (13) are designed in the form of two L-shaped brackets (23, 24), the outward-facing horizontal limbs (25) of the interior brackets (23) overlapping the horizontal inward-facing limbs (26) of the exterior brackets (24).

5. A splice box according to one of claims 1 to 4, characterised in that tension relief means (10,11) are arranged on the base (1) opposite the apertures (7) in the diagonal wall members (4a, 4b).

6. A splice box according to claim 5, characterised in that the tension relief means (10,11) have an understructure (20) secured to the base (1), a clamping member (19) which can be tightened by means of screws (21), and a separate fixing (22a, 22b) for the tension members (27) of the optical waveguide cable in a tension relief plate (20a).

7. A splice box according to one of claims 1 to 6, characterised in that, in the front panel (3) forming the front wall, there is arranged a plurality of drill holes (9) through which to lead individual optical waveguides.

8. A splice box according to claim 7, characterised in that connectors and/or coupling sleeves are arranged in the drill holes (9).

9. A splice box according to claim 7 or 8, characterised in that the front panel (3) is covered by a panel (3a) provided with lettering.

## Revendications

1. Boîtier d'épissure pour fibres optiques comportant
- un fond (1) et plusieurs parois (2 à 4),
- des ouvertures (7, 9) dans au moins une paroi,
- une zone d'épissure (14) à peu près au centre du boîtier d'épissure pour recevoir les points de jonction des fibres optiques à connecter et
- des supports (12, 13) disposés à l'intérieur du boîtier d'épissure le long de trajectoires (15, 16) prédéfinies et destinés à fixer les spires mobiles des fibres optiques (54) à connecter, caractérisé en ce que la paroi arrière (4) se compose de deux éléments de paroi extérieurs disposés sur un plan, d'un élément de paroi (4c) central, disposé parallèlement à ces derniers et décalé vers l'intérieur et de respectivement un élément de paroi (4a, 4b) passant en biais entre l'élément de paroi (4c) central et l'élément de paroi extérieur, les ouvertures (7) étant disposées dans les éléments de paroi (4a, 4b) en biais.

2. Boîtier d'épissure selon la revendication 1, caractérisé en ce que des supports (12a à 12d ; 13a à 13d) extérieurs et intérieurs qui forment respectivement une trajectoire de spire (15 ; 16) externe et une trajectoire de spire interne, sont montés sur les parois (2, 4c) et sur le fond (1).

3. Boîtier d'épissure selon la revendication 1 ou la revendication 2, caractérisé en ce que plusieurs supports (12, 13) sont respectivement disposés le long des trajectoires (15, 16) prédéfinies.

4. Boîtier d'épissure selon l'une quelconque des revendications 1 à 3, caractérisé en ce que les supports intérieurs (13) sont réalisés sous forme de deux nervures (23, 24) en forme de L, les côtés horizontaux (25) tournés vers l'extérieur des nervures intérieures (23) empiétant sur les côtés horizontaux (26) tournés vers l'intérieur des nervures extérieures (24).

5. Boîtier d'épissure selon l'une quelconque des revendications 1 à 4, caractérisé en ce que sur le fond (1) sont disposés des délestages de traction (10, 11) situés face aux ouvertures (7) dans les éléments de paroi en biais (4a, 4b).

6. Boîtier d'épissure selon la revendication 5, caractérisé en ce que les délestages de traction (10, 11) présentent un socle (20) fixé sur le fond (1), un élément de serrage (19) pouvant être serré par des vis (21) et une fixation séparée (22a, 22b) pour les éléments de traction (27) du câble à fibres optiques dans une plaque de délestage de traction (20a).

7. Boîtier d'épissure selon l'une quelconque des revendications 1 à 6, caractérisé en ce que plusieurs alésages (9) destinés à la sortie des fibres optiques individuelles sont disposés dans le panneau frontal (3) formant la paroi antérieure.

8. Boîtier d'épissure selon la revendication 7, caractérisé en ce que des connecteurs ou des manchons d'accouplement sont disposés dans les alésages (9).

9. Boîtier d'épissure selon la revendication 7 ou la revendication 8, caractérisé en ce que le panneau frontal (3) est recouvert par un panneau (3a) muni d'une inscription.
